(19) Europäisches Patentamt
European Patent Office
Office européen des brevets

(11) **EP 2 932 212 B1**

(12) **EUROPÄISCHE PATENTSCHRIFT**

(45) Veröffentlichungstag und Bekanntmachung des Hinweises auf die Patenterteilung:
**28.09.2016 Patentblatt 2016/39**

(21) Anmeldenummer: **13814490.2**

(22) Anmeldetag: **13.12.2013**

(51) Int Cl.:
*G01J 5/00* (2006.01)     *G01J 5/08* (2006.01)

(86) Internationale Anmeldenummer:
**PCT/EP2013/076553**

(87) Internationale Veröffentlichungsnummer:
**WO 2014/090994 (19.06.2014 Gazette 2014/25)**

(54) **VERFAHREN UND VORRICHTUNG ZUM BERÜHRUNGSLOSEN BESTIMMEN DER TEMPERATUR EINES BEWEGTEN GEGENSTANDS MIT UNBEKANNTEM EMISSIONSGRAD**

METHOD AND DEVICE FOR CONTACTLESS MEASUREMENT OF THE TEMPERATURE OF A MOVING BODY WITH UNKNOWN EMISSIVITY

PROCÉDÉ ET APPAREIL POUR MESURER SANS CONTACT ET INDÉPENDEMMENT DU POUVOIR ÉMISSIF LA TEMPÉRATURE D'UN CORPS MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.12.2012 DE 102012024418**

(43) Veröffentlichungstag der Anmeldung:
**21.10.2015 Patentblatt 2015/43**

(73) Patentinhaber: **SIKORA AG**
**28307 Bremen (DE)**

(72) Erfinder:
• **SIKORA, Harald**
**28357 Bremen (DE)**

• **PARGA GARCIA, Abraham**
**28357 Bremen (DE)**

(74) Vertreter: **Hauck Patentanwaltspartnerschaft mbB**
**Kaiser-Wilhelm-Straße 79-87**
**20355 Hamburg (DE)**

(56) Entgegenhaltungen:
CN-A- 102 795 627     DE-A1- 2 150 963
DE-U1-202004 004 402     US-A- 3 884 075
US-A- 4 015 476     US-A- 4 316 088

EP 2 932 212 B1

**Beschreibung**

Die Erfindung betrifft ein Verfahren und eine Vorrichtung zum berührungslosen Bestimmen der Temperatur eines bewegten Gegenstands mit unbekanntem Emissionsgrad, insbesondere eines entlang seiner Längsachse geförderten Metalldrahts. Derartige Metalldrähte dienen z.B. als Leiter elektrischer Kabel. Sie besitzen einen Durchmesser im Bereich von 0,1 bis 100 mm und werden durch geeignete Führungseinrichtungen entlang ihrer Längsrichtung gefördert, beispielsweise zu Extrusionsvorrichtungen, in denen eine Isolierumhüllung auf die Metalldrähte aufgebracht wird. Unter anderem für den Extrusionsprozess, aber beispielsweise auch in einem vorangegangenen Vorwärm-, Ausheilungs- oder Härtungsverfahren ist es erforderlich, dass die bewegten Metalldrähte eine vorgegebene Temperatur besitzen. Bei der Herstellung von Adern ist es wichtig, dass die Isolation auf dem Leiter haftet. Zu diesem Zweck wird der Leiter unmittelbar vor Einlauf in den Extruder erwärmt. Darüber hinaus ist eine konstante Leitertemperatur dann besonders wichtig, wenn die Isolation eines Leiters geschäumt wird. Das ist besonders der Fall bei Datenübertragungsleitungen. Es besteht daher ein Bedarf, die Temperatur derartiger bewegter Gegenstände zu messen und gegebenenfalls auf einen Sollwert zu regeln.

Berührungslose Temperaturmessungen erfolgen mit sogenannten Pyrometern, die die von den zu messenden Gegenständen ausgehende Wärmestrahlung erfassen. Bekannte Pyrometer arbeiten beispielsweise in einem Infrarot-Wellenlängenbereich, z.B. von 2 bis 15 $\mu$m. Die Wärmestrahlung wird bekanntermaßen gemäß der folgenden Gleichung durch drei Parameter bestimmt:

$$e + r + t = 1 \qquad Gl.\ (1)$$

Darin bezeichnet e den Emissionsgrad, r den Reflektionsgrad und t den Transmissionsgrad. Bei den vorliegend zu messenden Gegenständen kann davon ausgegangen werden, dass der Transmissionsgrad für Metalle beispielsweise in einem Infrarot-Messbereich im Wesentlichen Null ist. Die obige Gleichung (1) vereinfacht sich daher wie folgt:

$$e + r = 1 \qquad Gl.\ (2)$$

Bei einem idealen schwarzen Strahler ist der Reflektionsgrad Null, d.h. es gilt e = 1. Bei realen Gegenständen, beispielsweise bei Metalldrähten, ist dagegen der Reflektionsgrad r in der Regel erheblich höher als der Emissionsgrad e. Hinzu kommt, dass sich der Emissionsgrad abhängig von Faktoren wie Oberflächenbeschaffenheit oder auch Temperatur verändert. In der Praxis ist der Emissionsgrad des zu messenden bewegten Gegenstandes daher oftmals nicht bekannt.

Es sind bereits Verfahren bekannt, mit denen die Temperatur von Gegenständen berührungslos gemessen werden kann, deren Emissionsgrad e unbekannt ist. Dabei wird durch eine externe Bestrahlung des zu messenden Gegenstandes der aufgrund des Emissionsgrads e < 1 in der Gleichung e + r = 1 zu 1 fehlende Anteil der Strahlung durch die externe Bestrahlung ausgeglichen. Insbesondere wird die von der externen Strahlungsquelle auf den zu messenden Gegenstand geleitete Wärmestrahlung von dem Gegenstand gemäß seinem Reflektionsgrad r reflektiert, so dass der fehlende Teil der Wärmestrahlung durch die externe Bestrahlung quasi "aufgefüllt" wird zu 1. Auf dieser Grundlage lassen sich berührungslose Temperatursensoren in Strahlungspyrometern in reproduzierbare Temperaturmesswerte, z.B. in °C, kalibrieren.

Ein solches Verfahren mit externer Bestrahlung ist beispielsweise bekannt aus DE 691 03 207 T2. Bei dem bekannten Verfahren wird ein in einer Behandlungskammer stationär angeordneter großflächiger Wafer vermessen. Bei der berührungslosen Temperaturmessung von kleinen Gegenständen, beispielsweise dünnen Metalldrähten, ist die Ausrichtung des Temperatursensors auf den zu messenden Gegenstand allerdings problematisch. Dies gilt insbesondere dann, wenn der zu messende Gegenstand nicht fixiert ist, sondern bewegt wird. Insbesondere eine solche Bewegung kann dazu führen, dass der zu messende Gegenstand sich aus dem Messfeld des Temperatursensors bewegt, sei dies vollständig oder teilweise. In beiden Fällen kommt es zu Fehlmessungen. Dies gilt auch, wenn sich der bewegte Gegenstand nicht in der Ebene optimaler Bildschärfe (Fokus) des berührungslosen Temperatursensors befindet und dadurch der Messfleck größer werden kann als der zu messende Gegenstand. In US 4 409 042 A wird ein Verfahren zur berührungslosen Messung der Temperatur eines entlang seiner Längsrichtung bewegten Kupferdrahts beschrieben, bei dem der Kupferdraht durch eine parabolische Reflektoranordnung geführt wird. Die parabolische Reflektoranordnung besitzt hochreflektierende Innenflächen und reflektiert Strahlung in ihren Brennpunkt bzw. ihre Brennachse. Auf diesen Brennpunkt bzw. einen Punkt auf der Brennachse wird ein Infrarotdetektor fokussiert. Auf diese Weise soll auch bei einer Vibration unterliegenden bewegten Kupferdrähten eine zuverlässige Temperaturmessung möglich sein. Dieses Verfahren ist allerdings von erheblichem Aufwand. Auch hat sich in der Praxis gezeigt, dass die Temperaturmessung nicht immer die notwendige Genauigkeit liefert.

DE 21 50 963 offenbart eine Vorrichtung zur Messung und Kontrolle der Temperatur eines zylindrischen Gegenstandes, welcher in axialer und in radialer Richtung beweglich ist, mit dem Ziel, eine Unabhängigkeit der Temperaturmessung von der radialen Bewegung des zylindrischen Gegenstandes zu erreichen. Es wird die Temperatur des zylindrischen Gegenstandes durch ein Infrarotmesssystem gegenüber einem schwarzen Strahler als Referenzstrahlungsquelle gemessen, wobei der zylindrische Gegenstand in dem schwarzen Strahler bewegbar ist. Die aus dem schwarzen Strahler austretende, zu messende Infrarotstrahlung wird über einen schwingend gelagerten Spiegel zu einem Detektionssystem geführt.

US 4,316,088 offenbart ebenfalls eine Messvorrichtung und ein Messverfahren zur Temperaturbestimmung unter anderem von Drähten durch Vergleichsmessung der Infrarotstrahlung eines schwarzen Strahlers und der Infrarotstrahlung des Drahtes mit der Infrarotstrahlung des schwarzen Strahlers allein. Zusätzlich zu einem schwingend gelagerten Spiegel werden unterschiedliche Anordnungen von flachen und konkaven Spiegeln verwendet, mit dem Ziel einen größeren Anteil der Infrarotstrahlen zu detektieren und auszuwerten.

US 3,884,075 beschreibt eine Messvorrichtung zur Temperaturbestimmung von Drähten durch Detektion der Infrarotstrahlung eines Heizkörpers und des Drahtes, wobei mittels reflektierender Rotorblätter wechselweise die Infrarotstrahlung des Heizkörpers allein und die Infrarotstrahlung des Heizkörpers gemeinsam mit der Infrarotstrahlung des Drahtes durch einen Detektor gemessen werden.

Ausgehend von dem erläuterten Stand der Technik liegt der Erfindung die Aufgabe zugrunde, ein Verfahren und eine Vorrichtung der eingangs genannten Art bereitzustellen, mit denen in jederzeit zuverlässiger Weise eine präzise berührungslose Temperaturbestimmung von bewegten Gegenständen auch mit kleinen Durchmessern möglich ist.

Die Erfindung löst diese Aufgabe durch die Gegenstände der unabhängigen Ansprüche 1 und 9. Vorteilhafte Ausgestaltungen finden sich in den abhängigen Ansprüchen, der Beschreibung und den Figuren.

Die Erfindung löst die Aufgabe einerseits durch ein Verfahren zum berührungslosen Bestimmen der Temperatur eines bewegten Gegenstands mit unbekanntem Emissionsgrad, insbesondere eines entlang seiner Längsachse geförderten Metalldrahts, umfassend die Schritte: der Gegenstand wird durch mindestens eine Wärmestrahlung emittierende Strahlungsquelle bekannter Temperatur geführt, wobei der Gegenstand überwiegend oder vollständig von der mindestens einen Strahlungsquelle umgeben ist, mit mindestens einem Strahlungsdetektor wird eine ortsaufgelöste Wärmestrahlungsmessung in einem von dem Gegenstand bei seiner Führung durch die mindestens eine Strahlungsquelle durchlaufenen Bereich vorgenommen, wobei der mindestens eine Strahlungsdetektor neben dem zu messenden Gegenstand in dessen Hintergrund die Strahlung der mindestens einen Strahlungsquelle misst, auf Grundlage der ortsaufgelösten Wärmestrahlungsmessung wird die Temperatur des bewegten Gegenstands bestimmt.

Weiterhin löst die Erfindung die Aufgabe durch eine Vorrichtung zum berührungslosen Bestimmen der Temperatur eines bewegten Gegenstands mit unbekanntem Emissionsgrad, insbesondere eines entlang seiner Längsachse geförderten Metalldrahts, umfassend: mindestens eine Wärmestrahlung emittierende Strahlungsquelle bekannter Temperatur und eine Führungseinrichtung, mit der der bewegte Gegenstand durch die mindestens eine Strahlungsquelle geführt werden kann, wobei der Gegenstand überwiegend oder vollständig von der mindestens einen Strahlungsquelle umgeben ist, mindestens ein Strahlungsdetektor, der dazu ausgebildet ist, eine ortsaufgelöste Wärmestrahlungsmessung in einem von dem Gegenstand bei seiner Führung durch die mindestens eine Strahlungsquelle durchlaufenen Bereich vorzunehmen, wobei der mindestens eine Strahlungsdetektor neben dem zu messenden Gegenstand in dessen Hintergrund die Strahlung der mindestens einen Strahlungsquelle misst, eine Auswerteeinrichtung, die dazu ausgebildet ist, auf Grundlage der ortsaufgelösten Wärmestrahlungsmessung die Temperatur des bewegten Gegenstands zu bestimmen.

Das erfindungsgemäße Verfahren bzw. die erfindungsgemäße Vorrichtung dienen z.B. zum Bestimmen bzw. Messen der Temperatur eines bewegten Metalldrahts. Wie eingangs erläutert, kann ein solcher Metalldraht z.B. ein elektrischer Leiter für ein Kabel sein. Es kann sich entsprechend z.B. um einen Kupferdraht oder ähnliches handeln. Derartige Metalldrähte werden z.B. entlang ihrer Längsrichtung gefördert, um durch eine Extrusionsvorrichtung geführt zu werden, in der eine Isolierumhüllung aus Kunststoff auf dem Metalldraht extrudiert wird. Wie ebenfalls eingangs erläutert, ist es wichtig, die Temperatur solcher bewegter Gegenstände zu messen und gegebenenfalls auf einen Sollwert zu regeln. Der Emissionsgrad der erfindungsgemäß zu messenden Gegenstände ist nicht bekannt. Er ist jedenfalls kleiner als 1, da es sich nicht um einen schwarzen Strahler handelt. Beispielsweise bei einem Kupferdraht liegt der Emissionsgrad deutlich unterhalb von 0,1. Da der Transmissionsgrad zumindest im Infrarotmessbereich bei Metallen wie Kupfer annähernd Null ist, liegt ein sehr erheblicher Reflektionsgrad vor.

Erfindungsgemäß stammt von dem zu messenden bewegten Gegenstand reflektierte Wärmestrahlung von der mindestens einen (externen) Strahlungsquelle. Die Strahlungsquelle kann durch eine geeignete Heizeinrichtung beheizt sein und emittiert abhängig von ihrer Temperatur definiert und kalibrierbar Wärmestrahlung. Der bewegte Gegenstand wird durch die Strahlungsquelle hindurchgeführt und ist während seines Führens durch die Strahlungsquelle zumindest überwiegend, insbesondere im Wesentlichen vollständig, von der Strahlungsquelle umgeben. Es versteht sich, dass beispielsweise bei einem bewegten Metalldraht immer der Abschnitt von der Strahlungsquelle überwiegend oder vollständig umgeben ist, der gerade durch die Strahlungsquelle hindurchgeführt wird. Überwiegend bedeutet in diesem Zusammenhang, dass der größte Teil der Oberfläche des bewegten Gegenstands von der Strahlungsquelle umgeben ist. Ein Schlitz zum Einführen des Metalldrahtes an einer für die optische Funktion unbedeutenden Stelle des Umfangs würde voraussichtlich wenig stören. Der bewegte Gegenstand emittiert abhängig von seiner zu bestimmenden Temperatur eine Wärmestrahlung im Infrarotbereich, Darüber hinaus reflektiert der Gegenstand die von der Strahlungsquelle emittierte Wärmestrahlung. Es wird also in an sich bekannter Weise der Reflektionsanteil in der obigen Gleichung 2 durch die von der insoweit als Ausgleichsstrahlungsquelle dienenden Strahlungsquelle emittierte Wärmestrahlung zu 1 "aufgefüllt".

Der mindestens eine Strahlungsdetektor, bei dem es sich insbesondere um ein Pyrometer handeln kann, detektiert sämtliche Wärmestrahlung, also zum einen die von der mindestens einen Strahlungsquelle emittierte (und soweit bei einem nichtschwarzen Strahler vorhanden auch reflektierte) Wärmestrahlung. Zum anderen detektiert der mindestens eine Strahlungsdetektor die von dem bewegten Gegenstand emittierte und reflektierte Wärmestrahlung. Somit wird erfindungsgemäß auch bei bewegten Gegenständen mit kleinen Abmessungen eine klar definierte und kalibrierbare Messumgebung geschaffen, in der eine Temperaturmessung auch bei unbekanntem Emissionsgrad möglich ist.

Darüber hinaus erfolgt erfindungsgemäß eine berührungslose ortsaufgelöste Wärmestrahlungsmessung. Für die ortsaufgelöste Messung tastet der mindestens eine Strahlungsdetektor das Gebiet ab, in dem der zu messende Gegenstand zu erwarten ist. Die ortsaufgelöste Wärmestrahlungsmessung kann mit mindestens einem Infrarot-Strahlungsdetektor oder ähnlichem erfolgen. Entsprechend kann der mindestens eine Strahlungsdetektor mindestens einen Infrarot-Strahlungsdetektor oder ähnliches umfassen. Die Abtastung kann z. B. durch Bewegen, insbesondere Schwenken, des mindestens einen Strahlungsdetektors erfolgen. Es ist auch möglich, dass die ortsaufgelöste Wärmestrahlungsmessung durch einen ortsauflösenden Strahlungsdetektor, insbesondere eine Wärmebildkamera, erfolgt. Ein ortsauflösender Strahlungsdetektor kann z.B. ein eindimensionaler Zeilensensor oder ein zweidimensionales bolometrisches Sensorarray sein.

Die Temperatur der den zu messenden Gegenstand umgebenden Strahlungsquelle kann gemessen werden, ist also bekannt. Der zu messende Gegenstand wird bei der ortsaufgelösten Messung, z.B. im Videosignal eines Wärmebildsensors (Zeilen- oder Bildsensor), unsichtbar, wenn seine Temperatur mit der der umgebenden Strahlungsquelle übereinstimmt. Abweichende Temperaturen zeigen sich mit geringeren oder mit höheren Messpegeln in der ortsaufgelösten Wärmestrahlungsmessung, je nachdem, ob die Temperatur des zu messenden Gegenstandes geringer oder höher ist als die Temperatur der umgebenden Strahlungsquelle. Bei einer ortsaufgelösten Messung kann bei der Bestimmung der Temperatur von strangförmigen Produkten, wie z.B. Metalldrähten, sichergestellt werden, dass sich diese aufgrund ihrer Ausdehnung in Längsrichtung jedenfalls zeitweise in einer Ebene optimaler Schärfe (Messfokus des Strahlungsdetektors) befinden. Gemäß der Erfindung ist es damit möglich, die Temperatur berührungslos auch von solchen Gegenständen mit unbekanntem Emissionsgrad präzise und zuverlässig zu bestimmen, deren Abmessungen klein sind, insbesondere kleiner als das Messfeld des Strahlungsdetektors, welches sich z.B. bei einer Wärmebildkamera aus der Pixelfläche und dem optischen Abbildungsmaßstab ergibt.

Die mindestens eine Strahlungsquelle sollte vorzugsweise als schwarzer Körper ausgeführt sein. Bekanntlich ist ein schwarzer Strahler eine Idealisierung, bei der ein Emissionsgrad von 1 vorliegt. Gemäß dieser Ausgestaltung wird ein solcher schwarzer Strahler angenähert, soweit dies praktisch möglich und sinnvoll ist. Eine gute Annäherung für einen schwarzen Strahler bilden bekanntlich sogenannte Hohlraumstrahler, deren Innenfläche mit einer schwarzen Beschichtung versehen sein kann. Entsprechend ist vorgesehen, dass die mindestens eine Strahlungsquelle einen Hohlraumstrahler umfasst, mit einer Eintrittsöffnung und einer

Austrittsöffnung, wobei der Gegenstand durch die Eintrittsöffnung und die Austrittsöffnung durch den Hohlraumstrahler hindurch geführt wird, und wobei der Hohlraumstrahler mindestens eine Messöffnung umfasst, durch die die ortsaufgelöste Wärmestrahlungsmessung erfolgt. Bei dieser Ausgestaltung wird der zu messende Gegenstand durch die Eintrittsöffnung in den Hohlraumstrahler hineingeführt und durch die Austrittsöffnung wieder herausgeführt. Darüber hinaus besitzt der Hohlraumstrahler mindestens eine Messöffnung, die insbesondere separat von der Eintrittsöffnung und Austrittsöffnung ausgebildet ist. Der Hohlraumstrahler kann z.B. hohlzylindrisch sein. Die Eintrittsöffnung und die Austrittsöffnung können dann an den im Übrigen geschlossenen einander gegenüberliegenden Stirnseiten des hohlzylindrischen Hohlraumstrahlers angeordnet sein. Die mindestens eine Messöffnung kann dann im Bereich der Zylinderfläche des hohlzylindrischen Hohlraumstrahlers dem Strahlungsdetektor den erforderlichen Einblick in den Innenraum des Hohlraumstrahlers gewähren.

Nach einer weiteren Ausgestaltung kann vorgesehen sein, dass die ortsaufgelöste Wärmestrahlungsmessung durch die mindestens eine Messöffnung in einer Richtung erfolgt, die gegenüber der Längsachse des Gegenstands, die üblicherweise der Bewegungsrichtung des Gegenstands durch den Hohlraumstrahler entspricht, geneigt ist, insbesondere unter einem Winkel von 30° bis 60°. Die Richtung der Messung wird definiert durch die Ausrichtung des Strahlungsdetektors, beispielsweise einer Wärmebildkamera. Sie wird auch als Hauptmessrichtung bezeichnet. Bei Verwendung einer Fokussierungsoptik verläuft die Hauptmessrichtung insbesondere entlang der optischen Achse der Fokussierungsoptik. Wenn der Strahlungsdetektor, beispielsweise eine Wärmebildkamera, ein zweidimensionales Sensorarray umfasst, liegt die Hauptmesseinrichtung in der Regel mittig senkrecht auf der Array-Ebene des Sensorarrays. Sofern der mindestens eine Strahlungsdetektor um eine Schwenkachse geschwenkt wird, bildet die Verbindung zwischen der Schwenkachse und der Messöffnung die Hauptmessrichtung. Die schräge Ausrichtung kann in Bewegungsrichtung des Gegenstands verlaufen. Darüber hinaus kann der mindestens eine Strahlungsdetektor, beispielsweise eine ortsauflösende Wärmebildkamera, so ausgerichtet sein, dass eine ortsaufgelöste Temperaturmessung zumindest quer zur Bewegungsrichtung des Gegenstands erfolgt. Der Strahlungsdetektor erfasst also neben dem zu messenden bewegten Gegenstand auch die diese umgebende Strahlungsquelle, die als sogenannter schwarzer Strahler ausgeführt ist.

Durch die schräge Ausrichtung des Strahlungsdetektors gegenüber der Bewegungsrichtung des bewegten Gegenstands wird vermieden, dass die unvermeidbare Messöffnung des Hohlraumstrahlers unerwünschten Einfluss auf das Messergebnis nimmt. Insbesondere werden durch die gegenüber dem eigentlichen Messort in Bewegungsrichtung des Gegenstands verschobene Messöffnung die möglichst gut angenäherten Eigenschaften eines schwarzen Hohlraumstrahlers nicht gestört. Ein Winkelbereich von 30° bis 60°, beispielsweise etwa 45°, hat sich in dieser Hinsicht als besonders geeignet erwiesen. Darüber hinaus wird der zu messende Gegenstand auch dann sicher erfasst, wenn er in Bezug zur Blickrichtung des Strahlungsdetektors horizontal oder vertikal abweicht, solange sich der zu messende Gegenstand noch innerhalb des Sichtbereichs des Strahlungsdetektors, beispielsweise einer Wärmebildkamera, befindet. Eine Wärmebildkamera erfasst somit neben dem zu messenden Gegenstand in dessen Hintergrund die Strahlung des Hohlraumstrahlers, während der zu messende Gegenstand gleichzeitig durch den Hohlraumstrahler bestrahlt wird und so die nötige Ergänzung für die Reflektion $r = 1 - e$ erfährt. Auch bei dieser Ausgestaltung wird der zu messende Gegenstand also unsichtbar, wenn seine Temperatur mit der des Hohlraumstrahlers übereinstimmt. Unabhängig davon, in welcher horizontalen oder vertikalen Ablage von der Mittenachse beispielsweise einer Wärmebildkamera der zu messende Gegenstand dessen Sichtfeld passiert, wird der zu messende Gegenstand im Zuge seiner Fortbewegung stets zumindest vorübergehend in der Ebene optimaler Schärfe (Messfokus) erfasst.

Weiterhin ist vorgesehen, dass die Temperatur des bewegten Gegenstands ermittelt wird, indem eine Differenz zwischen der gemessenen, von der mindestens einen Strahlungsquelle emittierten und gegebenenfalls reflektierten Wärmestrahlung einerseits und der gemessenen, von dem bewegten Gegenstand emittierten und reflektierten Wärmestrahlung andererseits ausgewertet wird. Es kann sowohl eine örtliche als auch eine zeitliche Differenzmessung vorgenommen werden. Die ortsaufgelöste Temperaturmessung führt bei einem Temperaturunterschied zwischen dem zu messenden Gegenstand und der diesen umgebenden Strahlungsquelle zu einer Abweichung der gemessenen Intensität im Bereich des zu messenden Gegenstandes. Diese Abweichung der gemessenen Intensität, sei sie positiv oder negativ, gegenüber der mitgemessenen Intensität der Wärmestrahlung der Strahlungsquelle kann aufgrund der Ortsauflösung ausgewertet werden. So ist es beispielsweise möglich, in einem im Zuge der ortsaufgelösten Intensitätsmessung aufgenommenen Diagramm einen Unterschied zwischen einem Minimum und einem Maximum auszuwerten. Bei bekannter Temperatur der Strahlungsquelle kann hieraus die Temperatur des zu messenden Gegenstands bestimmt werden. Auch ist es beispielsweise möglich, im Sinne einer zeitlichen Differenzmessung jeweils einen Intensitätsmittelwert über den gemessenen Ortsbereich fortlaufend zu bestimmen und die Änderung dieses Mittelwerts bei Eintreten des zu messenden Gegenstands in das Messfeld zu ermitteln. Ist diese Mittelwertabweichung beispielsweise Null, so besitzt der zu messende Gegenstand die gleiche Temperatur wie die umgebende Strahlungsquelle.

Nach einer weiteren Ausgestaltung kann vorgesehen sein, dass der Strahlungsdetektor für die ortsaufgelöste Wärmestrahlungsmessung auf die Messöffnung des Hohlraumstrahlers und auf einen insbesondere die Messöffnung begrenzenden Abschnitt der Außenfläche des Hohlraumstrahlers gerichtet wird, wobei für die Differenzbildung die von dem Hohlraumstrahler in dem Abschnitt der Außenfläche des Hohlraumstrahlers emittierte und gegebenenfalls reflektierte Wärmestrahlung herangezogen wird. Auf diese Weise wird sichergestellt, dass für die Bildung der Differenz zu der von dem bewegten Gegenstand emittierten und reflektierten Wärmestrahlung tatsächlich nur die von dem Hohlraumstrahler emittierte und gegebenenfalls reflektierte Wärmestrahlung herangezogen wird und nicht versehentlich auch Wärmestrahlung von dem bewegten Gegenstand. Gerade bei schnell bewegten Gegenständen, wie elektrischen Leitern, die mit beispielsweise mehr als 20 m/s bewegt werden, ist die genaue Lage aufgrund von Vibrationen nicht exakt genug bekannt.

Erfindungsgemäß ist vorgesehen, dass der Strahlungsdetektor für die ortsaufgelöste Messung durch die Messöffnung hindurch sowohl einen ersten Bereich erfasst, in dem der bewegte Gegenstand sich bezüglich seiner Bewegungsrichtung unterhalb der Messöffnung befindet als auch einen zweiten Bereich erfasst, in dem der bewegte Gegenstand sich senkrecht zu seiner Bewegungsrichtung betrachtet nicht unterhalb der Messöffnung befindet. Es ist dann weiter vorgesehen, dass anhand der Messwerte in dem ersten Bereich eine Lage des bewegten Gegenstands ermittelt wird und daraus auf eine Lage des bewegten Gegenstands in dem zweiten Bereich geschlossen wird, wobei die in dieser Lage des zweiten Bereiches gemessene, von dem bewegten Gegenstand emittierte und reflektierte Wärmestrahlung für die Differenzbildung herangezogen wird. In dem Bereich, in dem der bewegte Gegenstand sich senkrecht zu seiner Bewegungsrichtung betrachtet unterhalb der Messöffnung befindet, ist dieser nicht der Wärmestrahlung des mindestens einen Hohlraumstrahlers ausgesetzt. Daher wird der Gegenstand in diesem Bereich von dem Strahlungsdetektor als erheblich kälter wahrgenommen und ist in der ortsaufgelösten Messung sehr gut gegenüber der Umgebung zu diskriminieren. Die gerade bei schnell bewegten Gegenständen nicht ausreichend genau bekannte Lage kann auf diese Weise genau ermittelt werden. Mit dieser Lagekenntnis kann dann in dem zweiten Bereich zuverlässig auf den Messabschnitt geschlossen werden, in dem sich der Gegenstand befinden muss. Dieser Messabschnitt wird dann für die Differenzbildung berücksichtigt.

Wie bereits erläutert, kann die Temperatur der mindestens einen Strahlungsquelle ebenfalls mit einem weiteren Temperatursensor gemessen werden. Auch ist es möglich, die Temperatur der mindestens einen Strahlungsquelle mit diesem weiteren Temperatursensor auf einen vorgegebenen Temperaturwert zu regeln. Die Kenntnis der Temperatur der mindestens einen Strahlungsquelle ist insbesondere für eine absolute Temperaturbestimmung des zu messenden Gegenstands wichtig, nicht zuletzt bei einer Differenzmessung. Es ist auch möglich, die mindestens eine Strahlungsquelle auf eine Solltemperatur des zu messenden bewegten Gegenstands zu regeln. Es kann dann z.B. ein Signal ausgegeben werden, wenn die Messung ergibt, dass der Gegenstand eine von der Temperatur der Strahlungsquelle und damit der Solltemperatur abweichende Temperatur besitzt. Auf dieser Grundlage kann die Temperatur des bewegten Gegenstands mittels einer geeigneten Regeleinrichtung auf einen zum Beispiel gleich großen Sollwert eingestellt werden.

Auch ist es denkbar, die Temperatur der mindestens einen Strahlungsquelle durch eine geeignete Heizeinrichtung so lange zu verändern, bis eine Differenz zwischen der gemessenen, von der mindestens einen Strahlungsquelle emittierten und gegebenenfalls reflektierten Wärmestrahlung einerseits und der gemessenen, von dem bewegten Gegenstand emittierten und reflektierten Wärmestrahlung andererseits möglichst Null ist. Das ortsaufgelöst gemessene Intensitätssignal ist dann also über den erfassten Ortsbereich weitestgehend konstant. Es besitzt insbesondere keine signifikante Abweichung im Bereich des bewegten Gegenstands. Dabei kann weiterhin mittels eines Temperatursensors die Temperatur der mindestens einen Strahlungsquelle gemessen werden. Es kann dann aus der bei konstantem Intensitätssignal gemessenen Temperatur der Strahlungsquelle auf die Temperatur des bewegten Gegenstands geschlossen werden.

Eine Wärmebildkamera kann in der Regel Temperaturen messen, wenn der Emissionsgrad bekannt ist, das ist insbesondere bei sogenannten schwarzen Körpern mit einem Emissionsgrad von ungefähr 1 gegeben. Auch eine erfindungsgemäß beispielsweise vorgesehene Wärmebildkamera könnte die Temperatur des Wärmestrahlers messen und gegebenenfalls auch regeln. Schwarze Körper können in der Praxis degenerieren, z. B. durch Feuchtigkeit, Schmutz oder Abrieb. In diesem Fall wäre die von der Wärmebildkamera erfasste Temperatur geringer als tatsächlich vorhanden. Auch eine Verschmutzung des Objektivs der Wärmebildkamera verursacht ganz ähnliche Messfehler. Die Regelung der Strahlungsquelle erfolgt deshalb zweckmäßigerweise durch einen Temperaturfühler. Auch können Abweichungen der mit Hilfe des Strahlungsdetektors erfassten Temperatur der Strahlungsquelle bei einer Verschmutzung derselben genutzt werden, die Messwerterfassung zu korrigieren und bei zu großer Abweichung eine Fehlermeldung zu generieren.

Nach einer weiteren Ausgestaltung kann vorgesehen sein, dass aus einer Differenz zwischen der gemessenen, von der mindestens einen Strahlungsquelle emittierten Wärmestrahlung einerseits und der gemessenen, von dem bewegten Gegenstand emittierten und reflektierten Wärmestrahlung andererseits eine Abmessung, insbesondere ein Durchmesser, des bewegten Gegenstands ermittelt wird. Die Bestimmung von Abmessungen des bewegten Gegenstands, insbesondere eines Durchmessers eines Metalldrahts, wird durch die erfindungsgemäße ortsaufgelöste Messung ermöglicht, sofern ein Temperaturunterschied zwischen der Strahlungsquelle und dem durch diese bewegten Gegenstand besteht. Zur Ermittlung einer solchen Abmessung bzw. eines Durchmessers wird die über den Ort aufgelöste Messung der Wärmestrahlungsintensität ausgewertet. Um die Messung zu ermöglichen, kann gezielt ein Temperaturunterschied zwischen dem zu messenden Gegenstand und der mindestens einen Strahlungsquelle eingestellt werden.

Die mindestens eine Strahlungsquelle kann nach einer weiteren Ausgestaltung eine mittels einer Heizquelle beheizte Haube sein, die ein Rad umgibt, auf dessen Lauffläche eine Rille ausgebildet ist, in der der bewegte Gegenstand geführt wird. Das Rad kann drehbar gelagert sein. Es kann auch mittels einer geeigneten Antriebseinrichtung drehbar angetrieben sein. Über die Heizquelle kann das Rad auf eine Solltemperatur gebracht und gegebenenfalls auf diese geregelt werden. Diese Ausgestaltung ist von besonderem Vorteil bei stark vibrierenden Gegenständen, wie dünnen Metalldrähten. Die Rille führt zu einer Stabilisierung der Position des Gegenstands bezüglich seines Abstands zum Temperatursensor, was wiederum die Temperaturbestimmung erleichtert. Gleichzeitig kann durch eine ausreichende Tiefe der Rille der bewegte Gegenstand wiederum zumindest überwiegend von der einen Strahlungsquelle umgeben werden, so dass wiederum die erfindungsgemäße definierte Messumgebung vorliegt. Dazu kann die Rille eine Tiefe besitzen, die doppelt so groß ist wie die Breite der Rille. Sie kann aber auch mindestens dreimal oder mindestens viermal so tief sein wie breit. Sofern die Rille über ihre Tiefe eine ungleichmäßige Tiefe besitzt, z.B. einen V- oder U-förmigen Querschnitt, ist die in Bezug genommene Breite eine mittlere Breite, also insbesondere ein über die Tiefe der Rille gebildeter Mittelwert der Breite. Die Lauffläche und die Rille können darüber hinaus mit einer schwarzen Beschichtung versehen sein, um wiederum einen schwarzen Strahler möglichst gut anzunähern. Die ortsaufgelöste Messung kann zumindest quer zur Bewegungsrichtung des Gegenstands erfolgen. Der mindestens eine Strahlungsdetektor wird also entsprechend bewegt bzw. ausgerichtet, so dass z. B. seine eindimensionale Sensorzeile senkrecht zur Bewegungsrichtung des Gegenstands verläuft. Der möglicherweise fehlende Anteil der Wärmestrahlung aufgrund der nach außen gerichteten und von der Rille nicht umgebenen Drahtoberfläche kann durch eine zusätzliche Strahlungsquelle von außerhalb des Rades aufgefüllt werden. Dazu können die Lauffläche und die Rille zumindest abschnittsweise von einer weiteren Strahlungsquelle, insbesondere einer im Querschnitt U-förmigen Strahlungsquelle, überdeckt sein. Dieser weitere möglichst schwarze Strahler kann die Lauffläche mit der Rille und dem darin geführten bewegten Gegenstand, beispielsweise einem Metalldraht, haubenartig abdecken. Hierdurch wird das Umschließen des bewegten Gegenstands weiter verbessert und es wird eine weiter definierte und störungsfreie Messumgebung zur Verfügung gestellt. Auch bei dieser Ausgestaltung kann eine Messung entlang einer zur Bewegungsrichtung des zu messenden Gegenstands schrägen Hauptmessrichtung erfolgen.

Auf Grundlage der ermittelten Temperatur des bewegten Gegenstands ist eine Regelung der Temperatur des bewegten Gegenstands auf einen Sollwert möglich. Auch ist es möglich, mit Hilfe eines Temperaturfühlers oder eines seitlich angebrachten zusätzlichen berührungslosen Temperatursensors die Temperatur der Strahlungsquelle, beispielsweise einer beheizten Scheibe, und dort besonders die der Lauffläche (Rille), genau zu messen und zu regeln.

Die erfindungsgemäße Vorrichtung kann zur Durchführung des erfindungsgemäßen Verfahrens geeignet sein. Entsprechend kann das erfindungsgemäße Verfahren mit der erfindungsgemäßen Vorrichtung durchgeführt werden.

Ausführungsbeispiele der Erfindung werden nachfolgend anhand von Figuren näher erläutert. Es zeigen schematisch:

Fig. 1 eine erfindungsgemäße Vorrichtung zur Durchführung des erfindungsgemäßen Verfahrens nach einem ersten Ausführungsbeispiel,

Fig. 2 eine erfindungsgemäße Vorrichtung zur Durchführung des erfindungsgemäßen Verfahrens nach einem zweiten Ausführungsbeispiel in einer Schnittansicht

Fig. 3 die Vorrichtung aus Fig. 2 in einer weiteren Schnittansicht

Fig. 4a ein beispielhaftes Diagramm, wie es mit der erfindungsgemäßen Vorrichtung aufgenommen werden kann,

Fig. 4b ein weiteres beispielhaftes Diagramm, wie es mit der erfindungsgemäßen Vorrichtung aufgenommen werden kann

Fig. 4c ein weiteres beispielhaftes Diagramm, wie es mit der erfindungsgemäßen Vorrichtung aufgenommen werden kann,

Fig. 5 eine Schnittansicht durch die Vorrichtung aus Fig. 1 nach einem weiteren Ausführungsbeispiel,

Fig. 6 eine Aufnahme einer mit dem Aufbau aus Fig. 5 erstellten ortsaufgelösten Wärmestrahlungsmessung, und

Fig. 7 gibt zeichnerisch die Fig. 6 wieder.

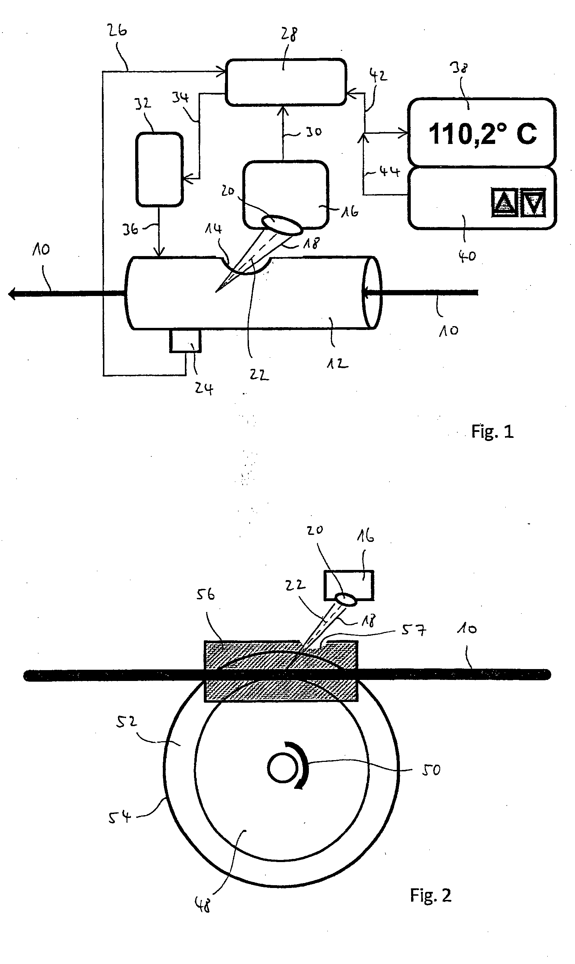

Mit der in Fig. 1 schematisch gezeigten erfindungsgemäßen Vorrichtung soll berührungslos die Temperatur eines bewegten Gegenstands 10, vorliegend eines wie durch die Pfeile in Fig. 1 veranschaulicht entlang seiner Längsrichtung geförderten Metalldrahts 10 gemessen werden. Die Laufrichtung des zu messenden Gegenstands 10 ist dabei unerheblich. Der Metalldraht 10 kann z.B. zu einer Extrusionsvorrichtung geführt werden, in der eine Isolierumhüllung aus Kunststoff auf den Metalldraht extrudiert wird. Die Vorrichtung umfasst darüber hinaus eine Strahlungsquelle 12, vorliegend einen hohlzylindrischen Hohlraumstrahler, der einen schwarzen Strahler möglichst gut abbilden soll. Der Hohlraumstrahler 12 ist dazu an seiner Innenfläche mit einer schwarzen Beschichtung versehen und besitzt eine an seiner in Fig. 1 rechten, im Übrigen geschlossenen Stirnseite vorgesehene Eintrittsöffnung für den Metalldraht 10 und eine auf der gegenüberliegenden, ebenfalls im Übrigen geschlossenen Stirnseite angeordnete Austrittsöffnung für den Metalldraht 10. Darüber hinaus weist der Hohlraumstrahler 12 eine im Bereich seiner Mantelfläche vorgesehene Messöffnung 14 auf. Durch die Messöffnung 14 hindurch kann ein Strahlungsdetektor 16, vorliegend eine ortsauflösende Wärmebildkamera 16, eine Messung im Innenraum des Hohlraumstrahlers 12 vornehmen. Das Messfeld eines mittleren Pixels der Wärmebildkamera oder die mittlere Position eines scannenden Single-Sensors eines Pyrometers ist bei dem Bezugszeichen 18 veranschaulicht und eine Abbildungsoptik der Wärmebildkamera 16 ist bei dem Bezugszeichen 20 veranschaulicht. Bei dem Bezugszeichen 22 ist gestrichelt eine Hauptmessrichtung der Wärmebildkamera 16 gezeigt, die gleichzeitig die optische Achse der Abbildungsoptik ist. Diese Hauptmessrichtung 22 verläuft in dem dargestellten Beispiel unter einem Winkel von etwa 45° gegenüber der Bewegungsrichtung des Metalldrahts 10, die gleichzeitig seine Längsachse ist.

Dem Hohlraumstrahler 12 ist ein bei dem Bezugzeichen 24 gezeigter Temperatursensor zugeordnet. Messdaten des Temperatursensors 24 werden über eine Verbindungsleitung 26 einer Auswerte- und Steuereinrichtung 28 der Vorrichtung zugeführt. Über eine Verbindungsleitung 30 werden dieser Auswerte- und Steuereinrichtung 28 auch Messwerte der Wärmebildkamera 16 zugeleitet. Über ein Halbleiterrelais 32, ein Optorelais, oder irgendein anderes Stellglied 32 kann durch die Auswerte- und Steuereinrichtung 28 über die Verbindungsleitungen 34 und 36 eine nicht näher gezeigte Heizeinrichtung des Hohlraumstrahlers 12 angesteuert werden, um den Hohlraumstrahler 12 auf eine vorgegebene Temperatur zu bringen.

Die Vorrichtung umfasst darüber hinaus eine Anzeigeeinheit 38, die eine von der Wärmebildkamera 16 ermittelte Temperatur des Metalldrahts 10 anzeigt und eine Bedieneinheit 40, mit der z.B. ein Sollwert für eine Temperatur des Hohlraumstrahlers 12 zur genauen Erfassung der Temperatur des Metalldrahts 10 eingestellt werden kann. Hierzu sind Verbindungsleitungen 42 und 44 vorgesehen.

Wie in Fig. 1 zu erkennen, wird der Metalldraht 10 im Zuge seiner Bewegung durch den Hohlraumstrahler 12 hindurchgeführt und ist dabei mit seinem durch den Hohlraumstrahler 12 hindurchgeführten Abschnitt im Wesentlichen vollständig von diesem umgeben. Die Wärmebildkamera 16 nimmt dabei eine ortsaufgelöste Wärmestrahlungsmessung durch die Messöffnung 14 hindurch vor. Dabei ist die Wärmebildkamera 16 so ausgerichtet, dass der Metalldraht 10 im Zuge seiner Bewegung jederzeit innehalb des Messfelds der Wärmebildkamera 16 verbleibt. Auf Grundlage der mittels des Temperatursensors 24 gemessenen Temperatur des Hohlraumstrahlers 12 kann durch Auswertung des aufgenommenen ortsaufgelösten Intensitätsverlaufs der Wärmestrahlung berührungslos die Temperatur des Metalldrahts 10 bestimmt werden, auch wenn der Emissionsgrad $e$ des Metalldrahts 10 nicht bekannt ist. Insbesondere wird von dem Metalldraht 10 von dem Hohlraumstrahler 12 ausgehende Wärmestrahlung reflektiert und so der fehlende Strahlungsanteil $r = 1 - e$ aufgefüllt. Die Ermittlung der Temperatur des Metalldrahts 10 kann beispielsweise auf Grundlage einer Differenzmessung erfolgen, wie oben erläutert. Aufgrund der schrägen Hauptmessrichtung 22 der Wärmebildkamera 16 gegenüber der Längsrichtung des Metalldrahts 10 durch die Messöffnung 14 ist sichergestellt, dass die Messöffnung 14 möglichst keinen Einfluss auf die Messung nimmt und somit die möglichst gut angenäherten Eigenschaften eines schwarzen Strahlers für den Hohlraumstrahler 12 erhalten bleiben.

Es ist weiterhin beispielsweise möglich, die Temperatur des Hohlraumstrahlers 12 auf die Solltemperatur des Metalldrahts 10 zu bringen. In diesem Fall könnte z.B. die Anzeigeeinheit 38 ein Signal ausgeben, sobald der Metalldraht 10 eine andere Temperatur als der Hohlraumstrahler 12 besitzt, was in der ortsaufgelösten Intensitätsmessung durch eine Intensitätsabweichung nach oben oder nach unten erkennbar ist. Auf dieser Grundlage könnte beispielsweise über die Bedieneinheit 40 oder auch automatisch eine nicht gezeigte Heizeinrichtung angesteuert werden, mit der der Metalldraht 10 auf die Solltemperatur gebracht wird.

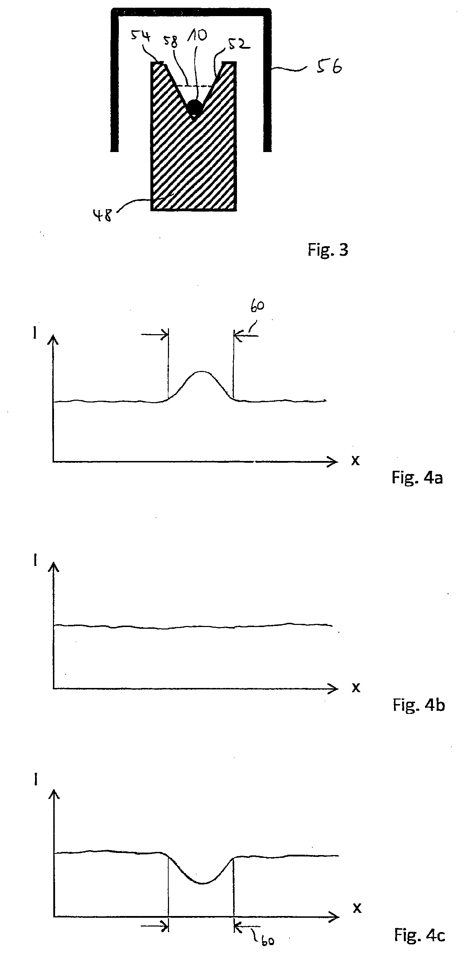

In den Figuren 2 und 3 ist ein zweites Ausführungsbeispiel einer erfindungsgemäßen Vorrichtung gezeigt. Dabei zeigt Fig. 3 ein vergrößertes Detail eines Teils der Vorrichtung aus Fig. 2. In den Figuren 2 und 3 ist der zu messende Gegenstand, vorliegend wiederum ein Metalldraht, bei dem Bezugzeichen 10 gezeigt. Wiederum wird der Metalldraht 10 entlang seiner Längsrichtung gefördert, in Fig. 2 von links nach rechts. Anders als bei dem Ausführungsbeispiel nach Fig. 1 wird der Metalldraht 10 bei dem Ausführungsbeispiel nach den Figuren 2 und 3 jedoch durch ein mittels einer nicht gezeigten Heizquelle beheiztes Rad 48 geführt. Das Rad 48 ist drehend angetrieben, wie in Fig. 2 durch den Pfeil 50 veranschaulicht und gegebenenfalls auch mit einem Antrieb versehen. Wiederum ist die Laufrichtung des zu messenden Gegenstands unerheblich. Die in Fig. 2 gezeigte Drehrichtung ist also rein beispielhaft und kann auch umgekehrt verlaufen, wenn der Leiter von rechts in die Fig. 2 einläuft. Zur Führung des Metalldrahts 10 weist das Rad 48 eine im Querschnitt, wie in Fig. 3 zu erkennen, V-förmige Rille 52 auf, die entlang ihrer Lauffläche 54 ausgebildet ist. Es kann ebenso nützlich sein, den in Fig. 2 gezeigten Metalldraht 10 das Messrad 48 über den ganzen Umfang umschlingen zu lassen. Die Oberfläche der Rille 52 und gegebenenfalls auch die Lauffläche 54 können mit einer schwarzen Beschichtung versehen sein, um wiederum einen schwarzen Strahler weitgehend anzunähern. Darüber hinaus ist in den Figuren 2 und 3 zu erkennen, dass neben dem beheizten Rad 48 als erste Strahlungsquelle eine weitere Strahlungsquelle vorgesehen ist, nämlich eine im Querschnitt U-förmige Strahlungsquelle 56, die das Rad 48 und insbesondere seine Rille 52 abschnittsweise überdeckt (siehe Fig. 3). Die weitere Strahlungsquelle 56 ist ebenfalls mit einer schwarzen Beschichtung versehen und kann ebenfalls mittels einer Heizeinrichtung beheizt sein. Sie soll wiederum möglichst weitgehend einen schwarzen Strahler annähern. Bei dem Bezugzeichen 58 ist beispielhaft die mittlere Breite der Rille 52 eingezeichnet. In dem gezeigten Beispiel ist die Tiefe der Rille, in Fig. 3 also von der Lauffläche 54 vertikal nach unten bis zur Spitze der Rille 52, etwa doppelt so groß wie die mittlere Breite 58 der Rille. Entscheidend für die genaue Messung der Temperatur des Metalldrahts 10 ist die Temperatur der diesen aufnehmenden und führenden Rille 52.

In Fig. 2 ist bei dem Bezugzeichen 16 wiederum eine ortsauflösende Wärmebildkamera gezeigt, deren Messfeld bei dem Bezugzeichen 18 zu erkennen ist sowie eine Abbildungsoptik bei dem Bezugzeichen 20. Die Hauptmessrichtung 22 verläuft wiederum schräg unter einem Winkel zur Bewegungsrichtung des Metalldrahts 10 im Messbereich, und zwar durch eine Messöffnung 57 der weiteren Strahlungsquelle 56. Darüber hinaus kann die Wärmebildkamera 16 so ausgerichtet sein, dass eine ortsaufgelöste Temperaturmessung zumindest quer zur Bewegungsrichtung des Metalldrahts 10, in Fig. 3 also von links nach rechts bzw. umgekehrt, erfolgt. Die weitere Strahlungsquelle 56 kann dazu eine geeignete Messöffnung besitzen, so dass die Messung der Wärmebildkamera 16 durch die weitere Strahlungsquelle 56 hindurch möglich ist. Die Wärmebildkamera 16 erfasst dann das Rad 48, insbesondere die Lauffläche 54 und die Rille 52 einschließlich des darin geführten Metalldrahts 10.

Die Ausgestaltung nach den Figuren 2 und 3 eignet sich insbesondere für im Zuge der Bewegung stark vibrierende Metalldrähte 10. Die Ausgestaltung nach den Figuren 2 und 3 erreicht eine besonders definierte Führung des Metalldrahts 10. Die Messung der Temperatur des Metalldrahts 10 und die diesbezügliche Auswertung und gegebenenfalls Regelung kann in analoger Weise erfolgen, wie oben zu Fig. 1 erläutert.

In Fig. 4a ist beispielhaft ein Diagramm dargestellt, wie es mit der in Fig. 1 oder der in den Figuren 2 und 3 dargestellten erfindungsgemäßen Vorrichtung aufgenommen werden kann. In dem Diagramm ist die von der ortsauflösenden Wärmebildkamera 16 aufgenommene Intensität I über dem Ort x aufgetragen. Wie in Fig. 4a zu erkennen, erfolgt eine Intensitätsmessung über einen größeren Ortsbereich. Insbesondere erfasst die Wärmebildkamera den zu messenden Metalldraht 10 und zu beiden Seiten neben dem Metalldraht auch den diesen umgebenden Hohlraumstrahler 12 bzw. das diesen umgebende beheizte Rad 48 mit der Rille 52. In dem in Fig. 4a gezeigten Beispiel ist die Temperatur des vermessenen Metalldrahts 10 höher als die der umgebenden Strahlungsquelle, also des Hohlraumstrahlers 12 bzw. des beheizten Rads 48 mit seiner Rille 52. Entsprechend erhöht sich etwa in der Mitte des im Zuge der ortsaufgelösten Messung erfassten Bereichs die gemessene Intensität. Wie in Fig. 4a bei dem Bezugszeichen 60 dargestellt, kann aus der Breite des durch den Metalldraht 10 verursachten Intensitätsmaximums auch auf den Durchmesser des Metalldrahts geschlossen werden.

In Fig. 4b ist ein ähnliches Diagramm gezeigt, wie es in Fig. 4a dargestellt ist. Allerdings besitzt in diesem Fall der Metalldraht 10 im Wesentlichen die gleiche Temperatur wie die umgebende Strahlungsquelle, also insbesondere der Hohlraumstrahler 12 bzw. das beheizte Rad 48 mit seiner Rille 52. Entsprechend ist die Intensität I in diesem Fall über den gesamten gemessenen Ortsbereich im Wesentlichen konstant. Sofern beispielsweise die umgebende Strahlungsquelle auf die Solltemperatur des Metalldrahts 10 erwärmt ist, bedeutet die in Fig. 4b dargestellte Messung, dass auch der Metalldraht diese Solltemperatur besitzt. Sobald Abweichungen von der im Wesentlichen über den gesamten Ortsbereich konstanten Intensität festgestellt werden, die durch den Metalldraht 10 verursacht werden, kann die Temperatur des Metalldrahts 10 entsprechend nachgeregelt werden.

In Fig. 4c ist wiederum ein ähnliches Diagramm gezeigt, wie in den Figuren 4a und 4b dargestellt, wobei in diesem Fall die Temperatur des Metalldrahts 10 geringer ist als die der umgebenden Strahlungsquelle, also insbesondere des Hohlraumstrahlers 12 bzw. des beheizten Rads 48 mit der Rille 52. Entsprechend bildet sich in diesem Fall komplementär zu dem in Fig. 4a gezeigten Intensitätsmaximum ein Intensitätsminimum aus. Wiederum kann, wie bei dem Bezugszeichen 60 gezeigt, hieraus auf den Durchmesser des Metalldrahts 10 geschlossen werden. Aus der Abweichung des Maximums in Fig. 4a bzw. des Minimums in Fig. 4c gegenüber der daneben gemessenen Intensität können Rückschlüsse auf die Temperatur des Metalldrahts 10 getroffen werden, wie oben erläutert.

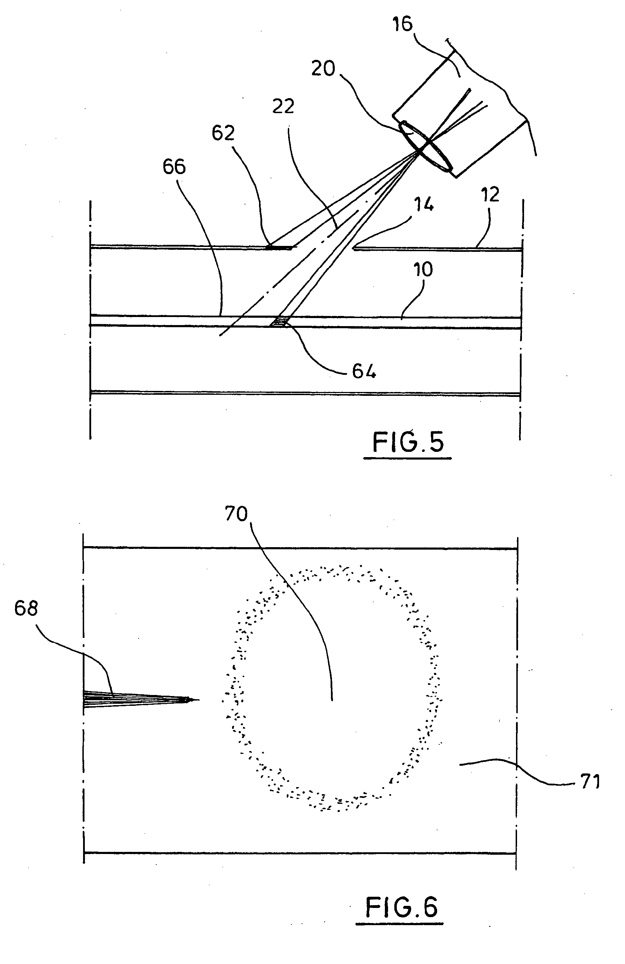

Bei dem in Fig. 5 gezeigten Ausführungsbeispiel ist die Abbildungsoptik 20 der Wärmebildkamera 16 derart ausgebildet, dass die ortsaufgelöste Wärmestrahlungsmessung zusätzlich zu der Wärmestrahlungsmessung durch die Messöffnung 14 auch einen die Messöffnung 14 begrenzenden Abschnitt 62 der Außenfläche des Hohlraumstrahlers 12 erfasst. Darüber hinaus erfasst die ortsaufgelöste Wärmestrahlungsmessung durch die Messöffnung 14 hindurch sowohl einen ersten Bereich 64, in dem der Metalldraht 10 sich senkrecht zu seiner Bewegungsrichtung (entlang seiner Längsrichtung in Fig. 5 von rechts nach links) unterhalb der Messöffnung 14 befindet als auch einen zweiten Bereich 66, in dem sich der Metalldraht 10 senkrecht zu seiner Bewegungsrichtung nicht unterhalb der Messöffnung 14 befindet, sondern vollständig von der Innenfläche des Hohlraumstrahlers 12 umgeben ist.

Zur Auswertung wird vorliegend eine Differenz zwischen der in dem Abschnitt 62 von dem Hohlraumstrahler 12 emittierten und gegebenenfalls reflektierten Wärmestrahlung einerseits und der von dem Metalldraht 10 in dem zweiten Bereich 66 andererseits emittierten und reflektierten Wärmestrahlung ausgewertet. Der erste Bereich 64 wird dabei zur genauen Lagebestimmung des Metalldrahts 10 im Messfeld der Wärmebildkamera 16 genutzt. Dies soll anhand der Fig. 6 erläutert werden. Der erste Bereich 64 ist in Fig. 6 im linken Teil der Wärmestrahlungsverteilung angeordnet, wobei sich der Metalldraht 10 im ersten Bereich 64 in Fig. 6 als dunkler Fleck 68 darstellt. Der Grund hierfür ist, dass in dem ersten Bereich 64 der Metalldraht 10 im Bereich der Messöffnung 14 nicht der Wärmestrahlung des Hohlraumstrahlers 12 ausgesetzt ist und somit in dem Wärmebild als dunkler, also vergleichsweise kalter Bereich erscheint. Auf dieser Grundlage kann zuverlässig die Lage des Metalldrahts 10 in dem Messfeld bestimmt werden. Es kann nun in dem in Fig. 6 mittleren Teil, der dem zweiten Bereich 66 aus Fig. 5 entspricht, auf die Lage des Metalldrahts 10 geschlossen werden. In dem gezeigten Beispiel liegt der Leiter in dem in Fig. 6 mit 70 gekennzeichneten Bereich. Die in diesem Bereich ermittelten Wärmestrahlungswerte werden für die Differenzbildung als von dem Metalldraht 10 emittierter und reflektierter Wärmestrahlung herangezogen.

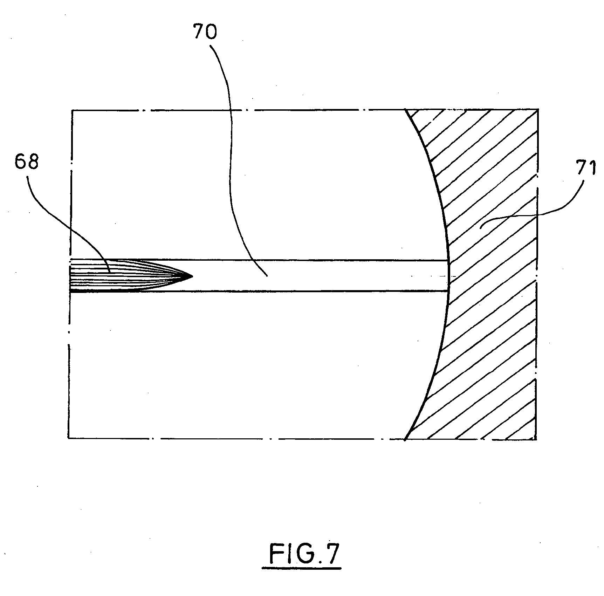

Fig. 7 gibt den Sachverhalt von Fig. 6 zeichnerisch wieder. In der Position 68 in Fig. 7 ist der Teil des Leiters zu sehen, der sich nahezu senkrecht unterhalb der Messöffnung befindet und nur eine reduzierte Bestrahlung erfährt. In Fig. 5 ist diese Position mit 64 bezeichnet. Im rechten Teil von Fig. 6 blickt der Detektor (Wärmebildkamera) auf die Außenfläche des Hohlraumstrahlers (siehe hierzu 62 in Fig. 5). In Fig. 7 ist diese Position mit 71 bezeichnet.

Die Erfassung der Temperatur der Außenfläche des Hohlraumstrahlers hat den Vorteil, dass diese Fläche über einen langen Zeitraum frei bleibt von Verschmutzungen oder Verkratzungen. Die Innenfläche des Hohlraumstrahlers ist produktionsbedingt ganz anderen Belastungen ausgesetzt. Kupferleiter führen zu Kupferstaub, der sich teilweise an der Innenfläche absetzt.

**Patentansprüche**

1. Verfahren zum berührungslosen Bestimmen der Temperatur eines bewegten Gegenstands (10) mit unbekanntem Emissionsgrad, insbesondere eines entlang seiner Längsachse geförderten Metalldrahts, umfassend die Schritte:

   - der Gegenstand (10) wird durch mindestens eine Wärmestrahlung emittierende Strahlungsquelle (12, 48, 56) bekannter Temperatur geführt, wobei der Gegenstand (10) überwiegend oder vollständig von der mindestens einen Strahlungsquelle (12, 48, 56) umgeben ist,
   - mit mindestens einem Strahlungsdetektor (16) wird eine ortsaufgelöste Wärmestrahlungsmessung in einem von dem Gegenstand (10) bei seiner Führung durch die mindestens eine Strahlungsquelle (12, 48, 56) durchlaufenen Bereich vorgenommen, wobei der mindestens eine Strahlungsdetektor (16) neben dem zu messenden Gegenstand (10) in dessen Hintergrund die Strahlung der mindestens einen Strahlungsquelle (12, 48, 56) misst,
   - auf Grundlage der ortsaufgelösten Wärmestrahlungsmessung wird die Temperatur des bewegten Gegenstands (10) bestimmt, indem eine Differenz zwischen der gemessenen, von der mindestens einen Strahlungsquelle (12, 48, 56) emittierten und gegebenenfalls reflektierten Wärmestrahlung einerseits und der gemessenen, von dem bewegten Gegenstand (10) emittierten und reflektierten Wärmestrahlung andererseits ausgewertet wird,
   - wobei die mindestens eine Strahlungsquelle (12, 48, 56) einen Hohlraumstrahler (12) umfasst, mit einer Eintrittsöffnung und einer Austrittsöffnung, wobei der Gegenstand (10) durch die Eintrittsöffnung und die Austrittsöffnung durch den Hohlraumstrahler (12) hindurch geführt wird, und wobei der Hohlraumstrahler (12) mindestens eine Messöffnung (14) umfasst, durch die die ortsaufgelöste Wärmestrahlungsmessung erfolgt,

   **dadurch gekennzeichnet,**

   - **dass** der Strahlungsdetektor (16) für die ortsaufgelöste Messung durch die Messöffnung (14) hindurch sowohl einen ersten Bereich erfasst, in dem der bewegte Gegenstand (10) sich, senkrecht zu seiner Bewegungsrichtung gesehen, unterhalb der Messöffnung (14) befindet als auch einen zweiten Bereich erfasst, in dem der bewegte Gegenstand (10) sich, senkrecht zu seiner Bewegungsrichtung gesehen, nicht unterhalb der Messöffnung (14) befindet, und
   - **dass** anhand der Messwerte in dem ersten Bereich eine Lage des bewegten Gegenstands (10) ermittelt wird und daraus auf eine Lage des bewegten Gegenstands (10) in dem zweiten Bereich geschlossen wird, wobei die in dieser Lage des zweiten Bereiches gemessene, von dem bewegten Gegenstand (10) emittierte und reflektierte Wärmestrahlung für die Differenzbildung herangezogen wird.

2. Verfahren nach Anspruch 1, **dadurch gekennzeichnet, dass** die mindestens eine Strahlungsquelle (12, 48, 56) mindestens einen möglichst schwarzen Strahler umfasst.

3. Verfahren nach einem der vorhergehenden Ansprüche, **dadurch gekennzeichnet, dass** die ortsaufgelöste Wärmestrahlungsmessung durch Bewegen, insbesondere Schwenken, des mindestens einen Strahlungsdetektors (16) erfolgt oder dass die ortsaufgelöste Wärmestrahlungsmessung durch einen ortsauflösenden Strahlungsdetektor (16), insbesondere eine Wärmebildkamera, erfolgt.

4. Verfahren nach einem der vorhergehenden Ansprüche, **dadurch gekennzeichnet, dass** die ortsaufgelöste Wärmestrahlungsmessung durch die mindestens eine Messöffnung (14) in einer Richtung (22) erfolgt, die gegenüber der Längsachse des Gegenstands (10) geneigt ist, insbesondere unter einem Winkel von 30° bis 60° und/oder dass der Strahlungsdetektor (16) für die ortsaufgelöste Wärmestrahlungsmessung auf die Messöffnung (14) des Hohlraumstrahlers (12) und auf einen insbesondere die Messöffnung (14) begrenzenden Abschnitt der Außenfläche des Hohlraumstrahlers (12) gerichtet wird, wobei für die Differenzbildung die von dem Hohlraumstrahler (12) in dem Abschnitt der Außenfläche des Hohlraumstrahlers (12) emittierte und gegebenenfalls reflektierte Wärmestrahlung herangezogen wird.

5. Verfahren nach einem der vorhergehenden Ansprüche, **dadurch gekennzeichnet, dass** die Temperatur der mindestens einen Strahlungsquelle (12, 48, 56) ebenfalls gemessen wird.

6. Verfahren nach Anspruch 5, **dadurch gekennzeichnet, dass** die Temperatur der mindestens einen Strahlungsquelle (12, 48, 56) auf einen vorgegebenen Temperaturwert geregelt wird.

7. Verfahren nach einem der vorhergehenden Ansprüche, **dadurch gekennzeichnet, dass** aus einer Differenz zwischen der gemessenen, von der mindestens einen Strahlungsquelle (12, 48, 56) emittierten Wärmestrahlung einerseits und der gemessenen, von dem bewegten Gegenstand (10) emittierten und reflektierten Wärmestrahlung andererseits eine Abmessung, insbesondere ein Durchmesser, des bewegten Gegenstands (10) ermittelt wird.

8. Verfahren nach einem der vorhergehenden Ansprüche, **dadurch gekennzeichnet, dass** auf Grundlager der ermittelten Temperatur des bewegten Gegenstands (10) eine Regelung der Temperatur des bewegten Gegenstands (10) auf einen Sollwert erfolgt.

9. Vorrichtung zum berührungslosen Bestimmen der Temperatur eines bewegten Gegenstands (10) mit unbekanntem Emissionsgrad, insbesondere eines entlang seiner Längsachse geförderten Metalldrahts, umfassend:

   - mindestens eine Wärmestrahlung emittierende Strahlungsquelle (12, 48, 56) bekannter Temperatur und eine Führungseinrichtung, mit der der bewegte Gegenstand (10) durch die mindestens eine Strahlungsquelle (12, 48, 56) geführt werden kann, wobei der Gegenstand (10) überwiegend oder vollständig von der mindestens einen Strahlungsquelle (12, 48, 56) umgeben ist,
   - mindestens ein Strahlungsdetektor (16), der dazu ausgebildet ist, eine ortsaufgelöste Wärmestrahlungsmessung in einem von dem Gegenstand (10) bei seiner Führung durch die mindestens eine Strahlungsquelle (12, 48, 56) durchlaufenen Bereich vorzunehmen, wobei der mindestens eine Strahlungsdetektor (16) neben dem zu messenden Gegenstand (10) in dessen Hintergrund die Strahlung der mindestens einen Strahlungsquelle (12, 48, 56) misst,
   - eine Auswerteeinrichtung, die dazu ausgebildet ist, auf Grundlage der ortsaufgelösten Wärmestrahlungsmessung die Temperatur des bewegten Gegenstands (10) zu bestimmen, indem eine Differenz zwischen der gemessenen, von der mindestens einen Strahlungsquelle (12, 48, 56) emittierten und gegebenenfalls reflektierten Wärmestrahlung einerseits und der gemessenen, von dem bewegten Gegenstand (10) emittierten und reflektierten Wärmestrahlung andererseits ausgewertet wird,
   - wobei die mindestens eine Strahlungsquelle (12, 48, 56) einen Hohlraumstrahler (12) umfasst, mit einer Eintrittsöffnung und einer Austrittsöffnung, wobei die Führungseinrichtung dazu ausgebildet ist, den Gegenstand (10) durch die Eintrittsöffnung und die Austrittsöffnung durch den Hohlraumstrahler (12) hindurch zu führen, wobei der Hohlraumstrahler (12) mindestens eine Messöffnung (14) umfasst, und wobei der mindestens eine Strahlungsdetektor (16) so ausgerichtet ist, dass die ortsaufgelöste Wärmestrahlungsmessung durch die mindestens eine Messöffnung (14) hindurch erfolgt,

**dadurch gekennzeichnet,**

   - **dass** der Strahlungsdetektor (16) für die ortsaufgelöste Messung durch die Messöffnung (14) hindurch sowohl einen ersten Bereich erfasst, in dem der bewegte Gegenstand (10) sich, senkrecht zu seiner Bewegungsrichtung gesehen, unterhalb der Messöffnung (14) befindet als auch einen zweiten Bereich erfasst, in dem der bewegte Gegenstand (10) sich, senkrecht zu seiner Bewegungsrichtung gesehen, nicht unterhalb der Messöffnung (14) befindet, und
   - **dass** die Auswerteeinrichtung anhand der Messwerte in dem ersten Bereich eine Lage des bewegten Gegenstands (10) ermittelt und daraus auf eine Lage des bewegten Gegenstands (10) in dem zweiten Bereich schließt, wobei die Auswerteeinrichtung in dieser Lage des zweiten Bereiches gemessene, von dem bewegten Gegenstand (10) emittierte und reflektierte Wärmestrahlung für die Differenzbildung heranzieht.

10. Vorrichtung nach Anspruch 9, **dadurch gekennzeichnet, dass** die mindestens eine Strahlungsquelle (12, 48, 56) mindestens einen möglichst schwarzen Strahler umfasst.

11. Vorrichtung nach einem der Ansprüche 9 oder 10, **dadurch gekennzeichnet, dass** eine Bewegungseinrichtung vorgesehen ist, mit der der mindestens eine Strahlungsdetektor (16) für die ortsaufgelöste Wärmestrahlungsmessung bewegbar, insbesondere schwenkbar, ist oder dass der mindestens eine Strahlungsdetektor (16) mindestens einen ortsauflösenden Strahlungsdetektor (16), insbesondere eine Wärmebildkamera, umfasst.

**12.** Vorrichtung nach einem der Ansprüche 9 bis 11, **dadurch gekennzeichnet, dass** der mindestens eine Strahlungsdetektor (16) so ausgerichtet ist, dass die Wärmestrahlungsmessung durch die mindestens eine Messöffnung (14) in einer Richtung (22) erfolgt, die gegenüber der Längsachse des Gegenstands (10) geneigt ist, insbesondere unter einem Winkel von 30° bis 60° und/oder dass der Strahlungsdetektor (16) für die ortsaufgelöste Wärmestrahlungsmessung auf die Messöffnung (14) des Hohlraumstrahlers (12) und auf einen insbesondere die Messöffnung (14) begrenzenden Abschnitt der Außenfläche des Hohlraumstrahlers gerichtet ist, wobei die Auswerteeinrichtung für die Differenzbildung die von dem Hohlraumstrahler (12) in dem Abschnitt der Außenfläche des Hohlraumstrahlers (12) emittierte und gegebenenfalls reflektierte Wärmestrahlung heranzieht.

**13.** Vorrichtung nach einem der Ansprüche 9 bis 12, **dadurch gekennzeichnet, dass** eine weitere Temperaturmesseinrichtung (24) zum Messen der Temperatur der mindestens einen Strahlungsquelle (12, 48, 56) vorgesehen ist.

**14.** Vorrichtung nach Anspruch 13, **dadurch gekennzeichnet, dass** eine Heizeinrichtung zum Heizen der mindestens einen Strahlungsquelle (12, 48, 56) und eine Regeleinrichtung vorgesehen sind, wobei die Regeleinrichtung dazu ausgebildet ist, die Heizeinrichtung so anzusteuern, dass die Temperatur der mindestens einen Strahlungsquelle (12, 48, 56) einen Soll-Temperaturweit annimmt.

**15.** Vorrichtung nach einem der Ansprüche 9 bis 14, **dadurch gekennzeichnet, dass** die Auswerteeinrichtung dazu ausgebildet ist, aus einer Differenz zwischen der gemessenen, von der mindestens einen Strahlungsquelle (12, 48, 56) emittierten und gegebenenfalls reflektierten Wärmestrahlung einerseits und der gemessenen, von dem bewegten Gegenstand (10) emittierten und reflektierten Wärmestrahlung andererseits eine Abmessung, insbesondere einen Durchmesser, des bewegten Gegenstands (10) zu ermitteln.

**16.** Vorrichtung nach einem der Ansprüche 9 bis 15, **dadurch gekennzeichnet, dass** eine Heizeinrichtung zum Heizen des bewegten Gegenstands (10) und eine Regeleinrichtung vorgesehen sind, wobei die Regeleinrichtung dazu ausgebildet ist, auf Grundlage der ermittelten Temperatur des bewegten Gegenstands (10) die Heizeinrichtung so anzusteuern, dass die Temperatur des bewegten Gegenstands (10) einen Soll-Temperaturwert annimmt.

**Claims**

**1.** A method for contactlessly determining the temperature of a moving object (10) having an unknown degree of emission, especially a metal wire conveyed along its longitudinal axis, comprising the steps:

- The object (10) is guided through at least one radiation source (12, 48, 56) emitting thermal radiation of known temperature, wherein the object (10) is mostly or completely surrounded by the at least one radiation source (12, 48, 56),
- with at least one radiation detector (16), a spatially-resolved thermal radiation measurement is performed in a region through which the object (10) passes when it is guided through the at least one radiation source (12, 48, 56), wherein the at least one radiation detector (16) detects the radiation of the at least one radiation source (12, 48, 56) in addition to the object (10) to be measured in its background,
- the temperature of the moving object (10) is measured on the basis of the spatially-resolved thermal radiation measurement, by evaluating a difference between the measured thermal radiation emitted and possibly reflected by the at least one radiation source (12, 48, 56), and the measured thermal radiation emitted and reflected by the moving object (10),
- wherein the at least one radiation source (12, 48, 56) comprises a cavity radiator (12) with an inlet opening and an outlet opening, wherein the object (10) is guided through the inlet opening and the outlet opening through the cavity radiator (12), and wherein the cavity radiator (12) comprises at least one measuring opening (14) through which the spatially-resolved thermal radiation measurement occurs, **characterized in that**
- the radiation detector (16) for the spatially-resolved measurement detects a first region through the measuring opening (14) in which the moving object (10) is located below the measuring opening (14) viewed perpendicular relative to its direction of movement, as well as a second region in which the moving object (10) is not below the measuring opening (14) when viewed perpendicular to its direction of movement, and
- a position of the moving object is determined using the measured values from the first region and a position of the moving object in the second region is deduced therefrom, wherein the thermal radiation emitted and reflected by the moving object (10) measured in this position of the second region is used to form the difference.

**2.** The method according to claim 1, **characterized in**

**that** the at least one radiation source (12, 48, 56) comprises at least one radiaor approximating a black radiator as closely as possible.

3. The method according to one of the preceding claims, **characterized in that** the spatially-resolved thermal radiation measurement occurs by moving, especially swinging, the least one radiation detector (16).or that the spatially-resolved thermal radiation measurement is performed by a spatially-resolving radiation detector (16), in particular a thermal imaging camera.

4. The method according to one of the preceding claims, **characterized in that** the spatially-resolved thermal radiation measurement is performed through the at least one measuring opening (14) in a direction (22) that is at an angle relative to the longitudinal axis of the object (10), in particular at an angle of 30° to 60° and/or that the radiation detector (16) for the spatially-resolved thermal radiation measurement can be directed toward the measuring opening (14) of the cavity detector (12) and toward a section of the outer surface of the cavity detector (12), in particular delimiting the measuring opening (14), wherein the thermal radiation emitted and possibly reflected by the cavity radiator (12) in the section of the outer surface of the cavity radiator (12) is used to form the difference.

5. The method according to one of the preceding claims, **characterized in that** the temperature of the at least one radiation source (12, 48, 56) is also measured.

6. The method according to claim 5, **characterized in that** the temperature of the at least one radiation source (12, 48, 56) is regulated to a set temperature value.

7. The method according to one of the preceding claims, **characterized in that** a dimension, especially a diameter, of the moving object (10) is determined from a difference between the measured thermal radiation emitted by the at least one radiation source (12, 48, 56) and the measured thermal radiation emitted and reflected by the moving object (10).

8. The method according to one of the preceding claims, **characterized in that** based on the detected temperature of the moving object (10), the temperature of the moving object (10) is regulated to a setpoint.

9. A device for contactlessly determining the temperature of a moving object (10) having an unknown degree of emission, especially a metal wire conveyed along its longitudinal axis, comprising:

- at least one radiation source (12, 48, 56) emitting thermal radiation of known temperature, and a guide apparatus by means of which the moving object (10) can be guided through the at least one radiation source (12, 48, 56), wherein the object (10) is mostly or completely surrounded by the at least one radiation source (12, 48, 56),

- at least one radiation detector (16), which is designed to perform a spatially-resolved thermal radiation measurement in a region through which the object (10) passes when it is guided through the at least one radiation source (12, 48, 56), wherein the at least one radiation detector (16) detects the radiation of the at least one radiation source (12, 48, 56) in addition to the object (10) to be measured in its background,

- an evaluation apparatus which is designed to determine the temperature of the moving object (10) based on the spatially-resolved thermal radiation measurement by evaluating a difference between the measured thermal radiation emitted and possibly reflected by the at least one radiation source (12, 48, 56), and the measured thermal radiation emitted and reflected by the moving object (10),

- wherein the at least one radiation source (12, 48, 56) comprises a cavity radiator (12) with an inlet opening and an outlet opening, wherein the guide apparatus is designed to guide the object (10) through the inlet opening and the outlet opening through the cavity radiator (12), wherein the cavity radiator (12) comprises at least one measuring opening (14), and wherein the at least one radiation detector (16) is aligned such that the spatially-resolved thermal radiation measurement is performed through the at least one measuring opening (14), **characterized in that**

- the radiation detector (16) for the spatially-resolved thermal radiation measurement detects a first region through the measuring opening (14) in which the moving object (10) is located below the measuring opening (14) viewed perpendicular to its direction of movement, as well as a second region in which the moving object (10) is not located below the measuring opening (14) perpendicular to its direction of movement, and

- the evaluation apparatus determines a position of the moving object (10) using the measured values from the first region, and a position of the moving object (10) in the second region is deduced therefrom, wherein the evaluation apparatus uses thermal radiation emitted and reflected by the moving object (10) measured in this position of the second region to form the difference.

**10.** The device according to claim 9, **characterized in that** the at least one radiation source (12, 48, 56) comprises at least one radiator approximating a black radiator as closely as possible.

**11.** The device according to one of claims 9 or 10, **characterized in that** a movement device is provided by means of which the least one radiation detector (16) for the spatially-resolved thermal radiation measurement can be moved, especially swung or that the at least one radiation detector (16) is at least one spatially-resolving radiation detector (16), in particular a thermal imaging camera.

**12.** The device according to one of claims 11 to 14, **characterized in that** the at least one radiation detector (16) is aligned such that the thermal radiation measurement is performed through the at least one measuring opening (14) in a direction (22) that is at an angle relative to the longitudinal axis of the object (10), in particular at an angle of 30° to 60° and/or that the radiation detector (16) for the spatially-resolved thermal radiation measurement is directed toward the measuring opening (14) of the cavity detector (12) and toward a section of the outer surface of the cavity detector, in particular delimiting the measuring opening (14), wherein the evaluation apparatus for forming the difference uses the thermal radiation emitted and possibly reflected by the cavity radiator (12) in the section of the outer surface of the cavity radiator (12).

**13.** The device according to one of claims 9 to 12, **characterized in that** an additional temperature measuring device (24) is provided to measure the temperature of the at least one radiation source (12, 48, 56).

**14.** The device according to claim 13, **characterized in that** a heating apparatus is provided to heat the at least one radiation source (12, 48, 56), and a regulation apparatus is provided, wherein the regulation apparatus is designed to control the heating apparatus such that the temperature of the at least one radiation source (12, 48, 56) assumes a target temperature value.

**15.** The device according to one of claims 9 to 14, **characterized in that** the evaluation apparatus is designed to determine a dimension, especially a diameter, of the moving object (10) from a difference between the measured thermal radiation emitted and possibly reflected by the at least one radiation source (12, 48, 56) and the measured thermal radiation emitted and reflected by the moving object (10).

**16.** The device according to one of claims 9 to 15, **characterized in that** a heating apparatus is provided to heat the moving object (10), and a regulation apparatus is provided, wherein the regulation device is designed to control the heating apparatus based on the determined temperature of the moving object (10) such that the temperature of the moving object (10) assumes a target.

**Revendications**

**1.** Procédé de détermination sans contact de la température d'un objet déplacé (10) avec un pouvoir émissif inconnu, notamment d'un fil métallique transporté le long de son axe longitudinal, comprenant les étapes :

- l'objet (10) est guidé à travers au moins une source de rayonnement (12, 48, 56) émettant un rayonnement thermique de température connue, dans lequel l'objet (10) est entouré principalement ou entièrement de l'au moins une source de rayonnement (12, 48, 56),
- une mesure de rayonnement thermique à résolution spatiale est effectuée avec au moins un détecteur de rayonnement (16) dans une région traversée par l'objet (10) lors de son guidage à travers l'au moins une source de rayonnement (12, 48, 56), dans lequel l'au moins un détecteur de rayonnement (16) mesure outre l'objet à mesurer (10) dans son arrière-plan le rayonnement de l'au moins une source de rayonnement (12, 48, 56),
- la température de l'objet déplacé (10) est déterminée sur la base de la mesure de rayonnement thermique à résolution spatiale en ce qu'une différence entre le rayonnement thermique mesuré, émis par l'au moins une source de rayonnement (12, 48, 56) et éventuellement réfléchi d'un côté et le rayonnement thermique mesuré, émis par l'objet déplacé (10) et réfléchi de l'autre côté est évaluée,
- dans lequel l'au moins une source de rayonnement (12, 48, 56) comprend un radiateur intégral (12) avec une ouverture d'entrée et une ouverture de sortie, dans lequel l'objet (10) est guidé à travers l'ouverture d'entrée et l'ouverture de sortie à travers le radiateur intégral (12), et dans lequel le radiateur intégral (12) comprend au moins une ouverture de mesure (14) à travers laquelle la mesure de rayonnement thermique à résolution spatiale s'effectue,

**caractérisé en ce**

- **que** le détecteur de rayonnement (16) pour la mesure à résolution spatiale détecte à travers l'ouverture de mesure (14) aussi bien une première région dans laquelle l'objet déplacé (10) se trouve, vu perpendiculairement à sa direction de mouvement, en dessous de l'ouverture de mesure (14) qu'une seconde région dans laquelle l'objet déplacé (10) ne se trouve pas, vu perpendiculairement à sa direction de mouvement, en dessous de l'ouverture de mesure (14), et

- **qu'**une position de l'objet déplacé (10) est déterminée à l'aide des valeurs de mesure dans la première région et il en est conclu sur une position de l'objet déplacé (10) dans la seconde région, dans lequel le rayonnement thermique mesuré dans cette position de la seconde région, émis par l'objet déplacé (10) et réfléchi est utilisé pour la formation de différence.

2. Procédé selon la revendication 1, **caractérisé en ce que** l'au moins une source de rayonnement (12, 48, 56) comprend au moins un radiateur noir si possible.

3. Procédé selon une des revendications précédentes, **caractérisé en ce que** la mesure de rayonnement thermique à résolution spatiale s'effectue par déplacement, notamment pivotement, de l'au moins un détecteur de rayonnement (16) ou que la mesure de rayonnement thermique à résolution spatiale s'effectue par un détecteur de rayonnement à résolution spatiale (16), notamment une caméra à infrarouge.

4. Procédé selon une des revendications précédentes, **caractérisé en ce que** la mesure de rayonnement thermique à résolution spatiale s'effectue à travers l'au moins une ouverture de mesure (14) dans une direction (22) qui est inclinée par rapport à l'axe longitudinal de l'objet (10), notamment d'un angle de 30° à 60° et/ou que le détecteur de rayonnement (16) pour la mesure de rayonnement thermique à résolution spatiale est dirigé vers l'ouverture de mesure (14) du radiateur intégral (12) et vers une section limitant notamment l'ouverture de mesure (14) de la face externe du radiateur intégral (12), dans lequel le rayonnement thermique émis par le radiateur intégral (12) dans la section de la face externe du radiateur intégral (12) et éventuellement réfléchi est utilisé pour la formation de différence.

5. Procédé selon une des revendications précédentes, **caractérisé en ce que** la température de l'au moins une source de rayonnement (12, 48, 56) est également mesurée.

6. Procédé selon la revendication 5, **caractérisé en ce que** la température de l'au moins une source de rayonnement (12, 48, 56) est régulée sur une valeur de température prédéfinie.

7. Procédé selon une des revendications précédentes, **caractérisé en ce qu'**une mesure, notamment un diamètre, de l'objet déplacé (10) est déterminée à partir d'une différence entre le rayonnement thermique mesuré, émis par l'au moins une source de rayonnement (12, 48, 56) d'un côté et le rayonnement thermique mesuré, émis par l'objet déplacé (10) et réfléchi de l'autre côté.

8. Procédé selon une des revendications précédentes, **caractérisé en ce qu'**une régulation de la température de l'objet déplacé (10) s'effectue sur une valeur de consigne sur la base de la température déterminée de l'objet déplacé (10).

9. Dispositif de détermination sans contact de la température d'un objet déplacé (10) avec un pouvoir émissif inconnu, notamment d'un fil métallique transporté le long de son axe longitudinal, comprenant :

- au moins une source de rayonnement (12, 48, 56) émettant un rayonnement thermique de température connue et un dispositif de guidage avec lequel l'objet déplacé (10) peut être guidé à travers l'au moins une source de rayonnement (12, 48, 56), dans lequel l'objet (10) est entouré principalement ou entièrement de l'au moins une source de rayonnement (12, 48, 56),
- au moins un détecteur de rayonnement (16) qui est réalisé pour effectuer une mesure de rayonnement thermique à résolution spatiale dans une région traversée par l'objet (10) lors de son guidage à travers l'au moins une source de rayonnement (12, 48, 56), dans lequel l'au moins un détecteur de rayonnement (16) mesure outre l'objet à mesurer (10) dans son arrière-plan le rayonnement de l'au moins une source de rayonnement (12, 48, 56),
- un dispositif d'évaluation qui est réalisé pour déterminer sur la base de la mesure de rayonnement thermique à résolution spatiale la température de l'objet déplacé (10) en ce qu'une différence entre le rayonnement thermique mesuré, émis par l'au moins une source de rayonnement (12, 48, 56) et éventuellement réfléchi d'un côté et le rayonnement thermique mesuré, émis par l'objet déplacé (10) et réfléchi de l'autre côté est évaluée,
- dans lequel l'au moins une source de rayonnement (12, 48, 56) comprend un radiateur intégral (12) avec une ouverture d'entrée et une ouverture de sortie, dans lequel le dispositif de guidage est réalisé pour guider l'objet (10) à travers l'ouverture d'entrée et l'ouverture de sortie à travers le radiateur intégral (12), dans lequel le radiateur intégral (12) comprend au moins une ouverture de mesure (14), et dans lequel l'au moins un détecteur de rayonnement (16) est orienté de sorte que la mesure de rayonnement thermique à résolution spatiale s'effectue à travers l'au moins une ouverture de mesure (14),

**caractérisé en ce**

- **que** le détecteur de rayonnement (16) pour la mesure à résolution spatiale détecte à travers l'ouverture de mesure (14) aussi bien une première région dans laquelle l'objet déplacé (10) se trouve, vu perpendiculairement à sa direction de mouvement, en dessous de l'ouverture de mesure (14) qu'une seconde région dans laquelle l'objet déplacé (10) ne se trouve pas, vu perpendiculairement à sa direction de mouvement, en dessous de l'ouverture de mesure (14), et

- **que** le dispositif d'évaluation détermine à l'aide des valeurs de mesure dans la première région une position de l'objet déplacé (10) et en conclut sur une position de l'objet déplacé (10) dans la seconde région, dans lequel le dispositif d'évaluation utilise le rayonnement thermique mesuré dans cette position de la seconde région, émis par l'objet déplacé (10) et réfléchi pour la formation de différence.

10. Dispositif selon la revendication 9, **caractérisé en ce que** l'au moins une source de rayonnement (12, 48, 56) comprend au moins un radiateur noir si possible.

11. Dispositif selon une des revendications 9 ou 10, **caractérisé en ce qu'**un dispositif de déplacement est prévu avec lequel l'au moins un détecteur de rayonnement (16) pour la mesure de rayonnement thermique à résolution spatiale peut être déplacé, notamment peut être pivoté, ou que l'au moins un détecteur de rayonnement (16) comprend au moins un détecteur de rayonnement à résolution spatiale (16), notamment une caméra à infrarouge.

12. Dispositif selon une des revendications 9 à 11, **caractérisé en ce que** l'au moins un détecteur de rayonnement (16) est orienté de sorte que la mesure de rayonnement thermique s'effectue à travers l'au moins une ouverture de mesure (14) dans une direction (22) qui est inclinée par rapport à l'axe longitudinal de l'objet (10), notamment d'un angle de 30° à 60° et/ou que le détecteur de rayonnement (16) pour la mesure de rayonnement thermique à résolution spatiale est dirigé vers l'ouverture de mesure (14) du radiateur intégral (12) et vers une section limitant notamment l'ouverture de mesure (14) de la face externe du radiateur intégral, dans lequel le dispositif d'évaluation utilise le rayonnement thermique émis par le radiateur intégral (12) dans la section de la face externe du radiateur intégral (12) et éventuellement réfléchi pour la formation de différence.

13. Dispositif selon une des revendications 9 à 12, caractérisé en ce qu'un autre dispositif de mesure de température (24) est prévu pour la mesure de la température de l'au moins une source de rayonnement (12, 48, 56).

14. Dispositif selon la revendication 13, **caractérisé en ce qu'**un dispositif de chauffage pour chauffer l'au moins une source de rayonnement (12, 48, 56) et un dispositif de régulation sont prévus, dans lequel le dispositif de régulation est réalisé pour commander le dispositif de chauffage de sorte que la température de l'au moins une source de rayonnement (12, 48, 56) adopte une valeur de température de consigne.

15. Dispositif selon une des revendications 9 à 14, **caractérisé en ce que** le dispositif d'évaluation est réalisé pour déterminer une mesure, notamment un diamètre, de l'objet déplacé (10), à partir d'une différence entre le rayonnement thermique mesuré, émis par l'au moins une source de rayonnement (12, 48, 56) et éventuellement réfléchi d'un côté et le rayonnement thermique mesuré, émis par l'objet déplacé (10) et réfléchi de l'autre côté.

16. Dispositif selon une des revendications 9 à 15, **caractérisé en ce qu'**un dispositif de chauffage pour chauffer l'objet mesuré (10) et un dispositif de régulation sont prévus, dans lequel le dispositif de régulation est réalisé pour commander le dispositif de chauffage sur la base de la température déterminée de l'objet déplacé (10) de sorte que la température de l'objet déplacé (10) adopte une valeur de température de consigne.

Fig. 1

Fig. 2

Fig. 3

Fig. 4a

Fig. 4b

Fig. 4c

FIG.5

FIG.6

EP 2 932 212 B1

FIG.7

20

**IN DER BESCHREIBUNG AUFGEFÜHRTE DOKUMENTE**

**In der Beschreibung aufgeführte Patentdokumente**

- DE 69103207 T2
- US 4409042 A
- DE 2150963
- US 4316088 A
- US 3884075 A